# FASCICULE DE BREVET EUROPEEN

(11) **EP 2 333 383 B1**
(45) Date de publication et mention de la délivrance du brevet: **23.05.2012**
(21) Numéro de dépôt: 10194608.5
(22) Date de dépôt: 10.12.2010
(51) Int. Cl.: F16H 61/4104, F16H 61/4139, F16H 61/448, B60K 17/14

(54) **Gavage supplémentaire pour circuit de transmission hydrostatique**
Zusätzliche Speiseleitung für hydrostatischen Übertragungskreislauf
Supplementary feeding for hydrostatic transmission circuit

(30) Priorité: 14.12.2009 FR 0958912
(43) Date de publication de la demande: 15.06.2011
(73) Titulaire: Poclain Hydraulics Industrie, 60411 Verberie (FR)
(72) Inventeur: Heren, Jean, 60280, MARGNY LES COMPIEGNE (FR)
(74) Mandataire: Texier, Christian

(56) Documents cités:
- EP-A1- 1 431 627
- FR-A1- 2 861 448
- FR-A1- 2 913 218

## Description

### DOMAINE TECHNIQUE GENERAL

L'invention concerne le domaine des circuits de transmission hydrostatiques, en particulier pour les machines industrielles ou les véhicules industriels.

Plus précisément, la présente invention concerne le domaine des circuits destinés à l'alimentation de moteurs hydrauliques.

### ETAT DE L'ART

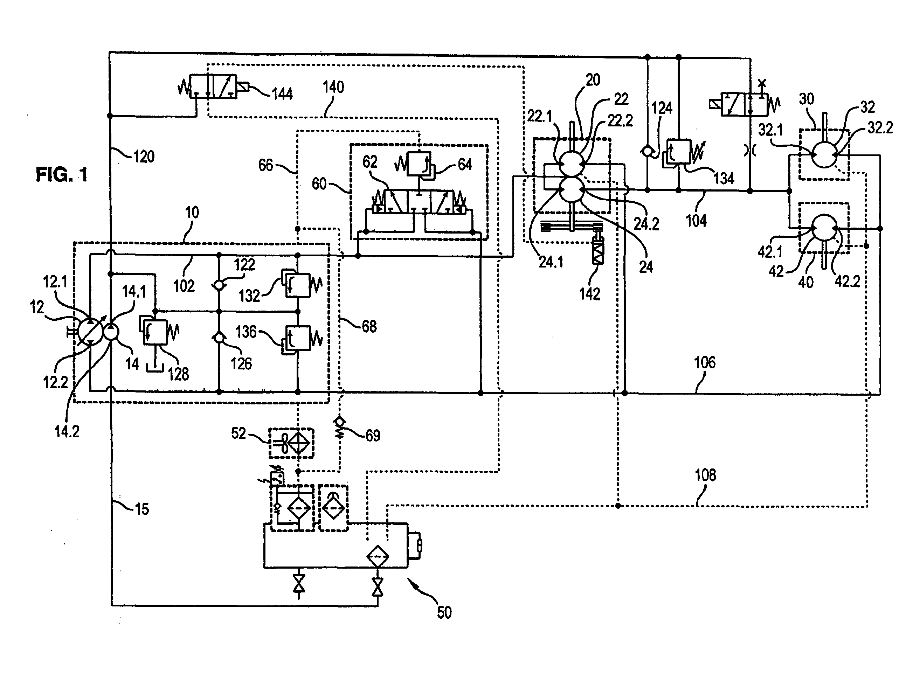

La figure 1 présente un circuit fermé de transmission hydrostatique selon l'état de l'art, typiquement utilisé pour des machines ou engins industriels tels que des engins de chantiers, agricoles, de manutention ou des poids-lourds.

Le circuit fermé présenté en figure 1 comprend un module de pompe 10, un premier bloc moteur hydraulique 20, un deuxième bloc moteur hydraulique 30, un troisième bloc moteur hydraulique 40, un réservoir de fluide 50, et un bloc d'échange 60.

Typiquement, le fluide contenu dans le réservoir de fluide 50 est de l'huile.

Le module de pompe 10 comprend une pompe hydraulique 12 à débit variable et une pompe de gavage 14.

Dans le mode de réalisation représenté, le premier bloc moteur 20 comprend deux moteurs hydrauliques 22 et 24 montés en parallèle, et désignés respectivement par la suite comme premier 22 et second 24 moteur élémentaire du premier bloc moteur 20, ces deux moteurs élémentaires 22 et 24 étant situés sur un même arbre de transmission. Le deuxième bloc moteur 30 comprend un moteur hydraulique 32 désigné par la suite comme deuxième moteur 32.

Le troisième bloc moteur 40 comprend un moteur hydraulique 42, désigné par la suite comme troisième moteur 42.

Chacun des moteurs hydrauliques, moteurs élémentaires et pompes comprend deux connexions, pouvant être utilisées en entrée ou en sortie selon le mode de fonctionnement.

La pompe hydraulique 12 est reliée par sa première connexion 12.1 au premier bloc moteur 20 par une ligne d'alimentation 102, et vient alimenter les deux moteurs élémentaires 22 et 24 du premier bloc moteur 20 via leurs premières connexions, respectivement 22.1 et 24.1. Le premier moteur élémentaire 22 est ensuite relié via sa seconde connexion 22.2 à une ligne retour 106, qui mène à la seconde connexion 12.2 de la pompe hydraulique 12.

Une ligne série 104 vient ensuite relier la seconde connexion 24.2 du deuxième moteur élémentaire 24 du premier bloc moteur 20 à chacune des premières connexions, respectivement 32.1 et 42.1 du deuxième moteur 32 et du troisième moteur 42. Ces deux moteurs 32 et 42 chacun montés directement en série avec le deuxième moteur élémentaire 24 du premier bloc moteur 20, sont montés en parallèle l'un de l'autre.

Le deuxième moteur 32 et le troisième moteur 42 sont ensuite reliés à la pompe hydraulique 12 via la ligne retour 106 qui est reliée à leurs secondes connexions, respectivement 32.2 et 42.2.

Selon un mode de réalisation particulier, les moteurs sont reliés selon une liaison dite Twin-Lock, telle que connue de l'état de l'art, permettant de cumuler les avantages des liaisons de type parallèle et série pour les moteurs hydrauliques.

En effet, de manière conventionnelle, les moteurs hydrauliques sont montés en série ou en parallèle, ces deux types de montage présentant des avantages et des inconvénients distincts.

Une liaison série entre deux moteurs hydrauliques permet en effet de faire tourner ces deux moteurs à la même vitesse si leurs cylindrées sont identiques, mais présente des inconvénients en ce qui concerne la répartition du couple, qui est alors limité au couple du premier desdits moteurs sur la ligne série, et ne permet pas d'avoir des vitesses de rotations différentes, notamment dans les virages.

Une liaison parallèle entre deux moteurs hydrauliques permet quant à elle d'avoir des vitesses de rotation différentes des moteurs, mais présente des inconvénients en cas de patinage ; le couple est alors limité à la valeur de couple la plus faible des deux moteurs hydrauliques.

Les carters des moteurs 22, 24, 32 et 42 sont reliés à une ligne de fuite 108, permettant d'acheminer les pertes de fluide dans ces moteurs vers le réservoir de fluide 50. Une telle ligne de fuite est typiquement reliée aux carters des moteurs, dans lesquels sont collectées les pertes de fluide.

Le bloc d'échange 60 comprend deux entrées et une sortie, les deux entrées étant connectées respectivement à la ligne d'alimentation 102 et à la ligne retour 106, et la sortie étant reliée à une ligne d'échange 66. Dans le mode de réalisation représenté, le bloc d'échange 60 comprend un tiroir d'échange 62 et une soupape 64 montés en série.

Le tiroir d'échange 62 comporte deux entrées et une sortie, et la soupape 64 comporte une entrée et une sortie. Les deux entrées du tiroir d'échange 62 sont reliées aux deux entrées du bloc d'échange 60, et sa sortie est reliée à l'entrée de la soupape 64, la soupape 64 étant d'autre part reliée par sa sortie à la sortie du bloc d'échange 60.

Le tiroir d'échange 62 comporte trois positions permettant de définir les liaisons entre deux voies d'entrée et une voie de sortie, la position employée étant définie par la différence de pression dans les deux voies d'entrée.

Dans le mode de réalisation représenté sur la figure 1, le bloc d'échange 60 est adapté pour prélever du fluide dans la ligne ayant la pression la plus faible entre la ligne d'alimentation 102 et la ligne de retour 106 afin de ne pas pénaliser le rendement de la transmission

La soupape d'échange 64 a quant à elle une fonction de limitation de pression, à un niveau légèrement inférieur a celui de la soupape de gavage 128.

De manière plus générale, le bloc d'échange 60 réalise une sortie de fluide, et peut par exemple comprendre des gicleurs de fuite, ou tout autre moyen adapté pour faire sortir du fluide du circuit fermé

Faire ainsi sortir du fluide du circuit fermé permet de renouveler le fluide qui circule, les sorties de fluide par le bloc d'échange 60 étant compensées par la pompe de gavage 14 qui réinjecte du fluide prélevé dans le réservoir de fluide 50.

Dans le mode de réalisation représenté, le fluide issu du bloc d'échange 60 est injecté dans le module de pompe 10, par exemple dans un carter de ce module de pompe 10, avant d'être refroidi par des moyens de refroidissement de fluide 52 puis réinjecté dans le réservoir de fluide 50. Une ligne de déviation 68 permet, en cas de pression trop importante dans la ligne d'échange 66, d'injecter directement le fluide de la ligne d'échange 66 dans le réservoir de fluide 50 via un clapet anti-retour 69 jouant le rôle de limiteur de pression.

La pompe de gavage 14 effectue un gavage du circuit de transmission hydrostatique au niveau de la ligne série 104, ainsi que dans la ligne ayant la pression la plus faible parmi la ligne d'alimentation 102 et la ligne de retour 106.

La pompe de gavage 14 est reliée à une ligne de gavage 120 via sa première connexion 14.1, ladite ligne de gavage 120 reliant la pompe de gavage avec la ligne d'alimentation 102, la ligne série 104 et la ligne retour 106 via des clapets anti-retour, respectivement 122, 124 et 126. La ligne d'alimentation 102, la ligne série 104 et la ligne de retour 106 sont également reliées à la ligne de gavage 120 via des soupapes permettant de limiter la pression dans ces lignes, respectivement 132, 134 et 136.

Un circuit de frein 140 passe par la ligne de gavage 120, et permet d'actionner un frein 142 du premier bloc moteur 20 lorsqu'une commande de frein 144 est actionnée.

Cette commande de frein permet d'acheminer du fluide de la ligne de gavage 120 vers le frein 142, qui vient alors agir sur le premier bloc moteur 20. Ce système fonctionne par défreinage, c'est-à-dire que le frein est appliqué lorsqu'il n'y à pas de pression dans la ligne 140. On obtient donc automatiquement un freinage de la machine lorsque le module de pompe est arrêté.

La pompe de gavage 14 est également utilisée par les moyens de contrôle de la position du plateau oscillant de la pompe à débit variable 12. Ces moyens sont internes au module de pompe 10 et ne sont pas représentés.

La pompe de gavage 14 est alimentée en fluide au moyen d'une ligne d'entrée 15 reliée à la seconde connexion 14.2 de la pompe de gavage 14, qui relie la pompe de gavage 14 au réservoir de fluide 50.

En cas de pression trop importante dans la ligne de gavage 120, une soupape 128 permet de faire sortir du fluide de cette ligne de gavage, typiquement en la renvoyant vers le réservoir 50 (bien qu'on aperçoive plusieurs petits réservoirs sur les figures, il s'agit d'un réservoir unique.), soit par la ligne 52, soit par 68 et 69.

Ce circuit permet, au moyen d'une pompe d'alimentation 12, d'alimenter en fluide trois blocs moteurs 20, 30 et 40, ici montés selon la technologie Twin-Lock. Une pompe de gavage 14 alimente une ligne de gavage 120, qui assure une pression de fluide suffisante dans le circuit, et vient compenser les pertes en injectant dans le circuit du fluide prélevé dans un réservoir de fluide 50, et assure également le débit d'échange au travers du bloc 60 (conduite non numérotée partant de la pompe de gavage 14, passant par les clapets 122 et 126, la ligne 106 ou 102, le bloc d'échange 60) Pour faire cela, la soupape 128 est tarée a un niveau de pression supérieur à la soupape 64.

Ce circuit présente cependant des inconvénients dans certains modes de fonctionnement. En effet, le gavage peut s'avérer insuffisant lors de virages, ou lorsque la machine va lentement et que le moteur thermique d'entrainement de la pompe fonctionne au ralenti La baisse de pression de gavage qui s'en suit peut provoquer l'application des freins 142 de manière inopportune, et également perturber la commande du plateau oscillant de contrôle de débit de la pompe hydraulique à débit variable 12. Ces organes ne peuvent plus assurer leurs fonctions avec les performances souhaitées et provoquent des vibrations et des secousses sur la machine.

Une méthode conventionnelle pour répondre à ces inconvénients consiste à utiliser une pompe de gavage de capacité supérieure ; toutefois, cela entraîne une hausse de l'encombrement du circuit ainsi que du coût du circuit, en raison du coût de la pompe en elle-même, et de son coût de fonctionnement plus élevé.

FR 2861448 ou FR 2913218 montre les caractéristiques du préambule de revendication 1.

### PRESENTATION DE L'INVENTION

La présente invention se propose de répondre à cette problématique, et propose un circuit fermé de transmission hydrostatique comprenant
- un réservoir de fluide,
- une pompe hydraulique,
- un premier ensemble moteur et un second ensemble moteur, lesdits premier et second ensembles moteur, comprenant chacun au moins un moteur hydraulique, ledit premier ensemble moteur étant relié à la pompe hydraulique par une ligne d'alimentation, et étant monté en série avec ledit second ensemble moteur via une ligne série, ledit second ensemble moteur étant relié à la pompe hydraulique par une ligne de retour,
- une pompe de gavage qui prélève du fluide dans le réservoir de fluide et gave le circuit fermé au niveau de la ligne série,
- un bloc d'échange relié au circuit fermé, et qui extrait de celui-ci un volume de fluide injecté par la pompe de gavage ledit circuit étant caractérisé en ce qu'il comprend en outre une ligne de gavage supplémentaire qui prélève du fluide en sortie du bloc d'échange et gave le circuit de transmission hydrostatique au niveau de la ligne série.

Selon un mode de réalisation particulier, la ligne de gavage supplémentaire comprend un clapet anti-retour adapté pour que le fluide ne puisse s'écouler que dans le sens de la ligne de gavage supplémentaire vers la ligne série.

Selon un autre mode de réalisation particulier, le premier ensemble moteur comprend deux moteurs hydrauliques élémentaires sur un même arbre de transmission, le premier de ces deux moteurs élémentaires étant relié à la pompe hydraulique par la ligne de retour, et le second de ces deux moteurs élémentaires étant relié par la ligne série au second ensemble moteur.

Selon un mode de réalisation particulier, le second ensemble moteur comprend deux moteurs hydrauliques montés en parallèles l'un par rapport à l'autre.

Selon un mode de réalisation particulier, le bloc d'échange comprend un tiroir d'échange et une soupape en série, ladite ligne de gavage étant reliée au bloc échange à un point situé entre ledit tiroir et ladite soupape.

Selon une variante de ce mode de réalisation particulier :
- ledit bloc d'échange comprend deux entrées et une sortie,
- ledit tiroir d'échange comprend deux entrées et une sortie,
- ladite soupape dudit bloc d'échange comprend une entrée et une sortie, lesdites deux entrées du bloc d'échange étant reliées aux deux entrées du tiroir d'échange,
la sortie du tiroir d'échange étant reliée à l'entrée de la soupape du bloc d'échange,
la sortie de la soupape du bloc d'échange étant reliée à la sortie du bloc d'échange.

Selon une variante de ce mode de réalisation particulier :
- la première entrée du bloc d'échange est reliée à la ligne d'alimentation d'une part, et à la première entrée du tiroir d'échange d'autre part,
- la seconde entrée du bloc d'échange est reliée à la ligne de retour d'une part, et à la seconde entrée du tiroir d'échange d'autre part, ledit tiroir d'échange comprenant trois positions :
- une première position dans laquelle la première entrée du tiroir d'échange est fermée, et la seconde entrée du tiroir d'échange est relié à la sortie du tiroir d'échange,
- une deuxième position dans laquelle la première entrée du tiroir d'échange, la seconde entrée du tiroir d'échange, et la sortie du tiroir d'échange sont fermées,
- une troisième position dans laquelle la première entrée du tiroir d'échange est reliée à la sortie du tiroir d'échange, et la seconde entrée du tiroir d'échange est fermée.

Selon un autre mode de réalisation particulier, les moteurs sont des moteurs à pistons radiaux commercialisés par la société Poclain Hydraulics.

### PRESENTATION DES FIGURES

D'autres caractéristiques, buts et avantages de l'invention ressortiront de la description qui suit, qui est purement illustrative et non limitative, et qui doit être lue en regard des dessins annexés, sur lesquels :
La figure 1 décrite précédemment présente un circuit de transmission hydrostatique selon l'état de la technique.
La figure 2 présente un circuit de transmission hydrostatique selon l'invention.
La figure 3 présente un mode de réalisation particulier de l'invention.

### DESCRIPTION DETAILLEE

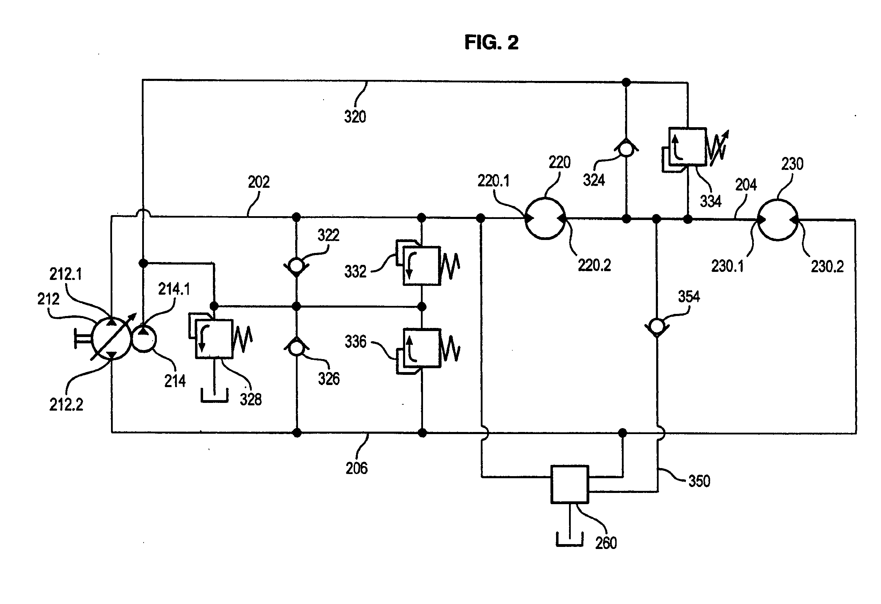

La figure 2 présente un circuit de transmission hydrostatique selon l'invention.

Le circuit représenté en figure 2 comprend une pompe hydraulique 212, un premier moteur hydraulique 220, un second moteur hydraulique 230, et une pompe de gavage 214.

Chacun des moteurs hydrauliques et pompes comprend deux connexions, pouvant être utilisées en entrée ou en sortie selon le mode de fonctionnement.

La pompe hydraulique 212 est reliée par sa première connexion 212.1 à une ligne d'alimentation 202, qui est également reliée à la première connexion 220.1 du premier moteur hydraulique 220.

Le premier moteur hydraulique 220 est relié par sa deuxième connexion 220.2 à une ligne série 204, qui est également reliée à la première connexion 230.1 du second moteur hydraulique 230.

Le second moteur hydraulique 230 est relié par sa deuxième connexion 230.2 à une ligne retour, qui est ensuite reliée à la seconde connexion 212.2 de la pompe 212.

La pompe de gavage 214 est reliée par sa connexion 214.1 à une ligne de gavage 320 qui est ensuite reliée à la ligne série 204, afin de permettre un gavage de cette ligne série 204.

La ligne de gavage comprend un clapet anti-retour 324, ainsi qu'une soupape 334 permettant de limiter la pression dans la ligne série 204. La ligne de gavage est également reliée à la ligne d'alimentation 202 et à la ligne retour 206, ces liaisons étant également munies de clapets anti-retour, respectivement 322 et 326, ainsi que de soupapes, respectivement 332 et 336.

Une soupape 328 permet de limiter la pression dans la ligne de gavage 320, et va laisser sortir du fluide de cette ligne de gavage en cas de pression trop élevée, typiquement en renvoyant ce fluide vers un réservoir de fluide.

Le circuit comprend également des moyens d'échange de fluide 260, destinés à prélever du fluide dans la ligne d'alimentation 202 et/ou dans la ligne retour 206, et à faire sortir le fluide prélevé du circuit, typiquement afin de permettre un refroidissement et/ou un renouvellement du fluide.

Une ligne de gavage supplémentaire 350 selon la présente invention est ajoutée, et vient relier les moyens d'échange de fluide 260 à la ligne série 204.

Cette ligne de gavage supplémentaire 350 est typiquement munie d'un clapet anti-retour 354, afin de n'autoriser la circulation du fluide que dans le sens de la ligne de gavage supplémentaire 350 vers la ligne série 204.

Une telle ligne de gavage supplémentaire 350 permet d'assurer un gavage suffisant du circuit de commande hydraulique, sans nécessiter d'utiliser une pompe de gavage surdimensionnée, permettant ainsi des économies à la fois en ce qui concerne la pompe de gavage en elle-même ; mais également en ce qui concerne son fonctionnement et son encombrement.

En outre, cette ligne de gavage supplémentaire 350 ne requiert pas l'installation de composants supplémentaires complexes ou encombrants dans le circuit, et ne requiert que l'ajout d'une ligne de fluide entre deux éléments.

Le circuit présenté en figure 2 permet donc d'alimenter deux moteurs hydrauliques 220 et 230 montés en série, tout en assurant un gavage suffisant notamment lors de virages, ou lorsque la machine va lentement et que les moteurs et pompes fonctionnent au ralenti, sans nécessiter de surdimensionner la pompe de gavage 214.

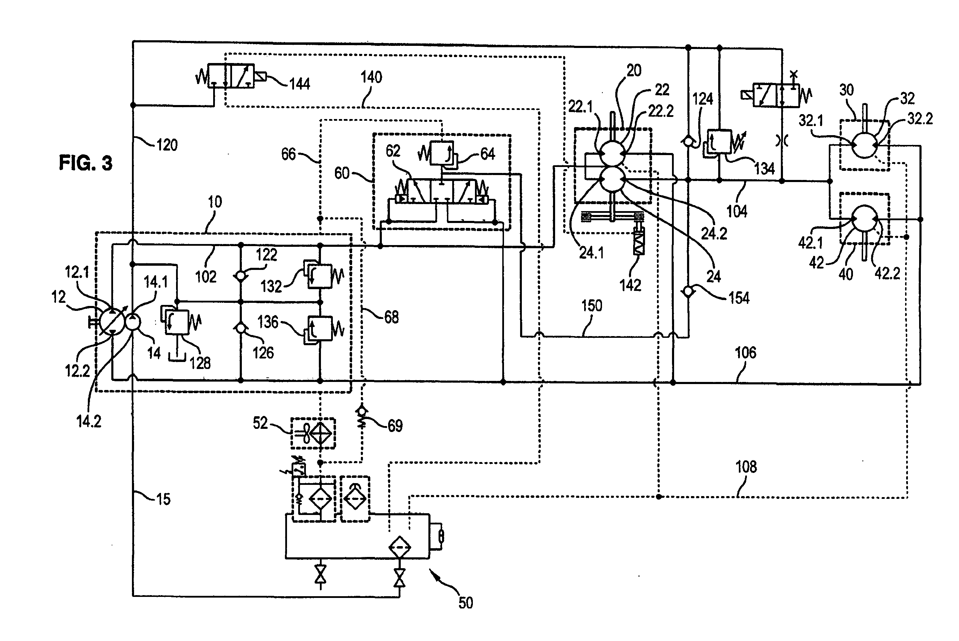

La figure 3 présente une application de l'invention au circuit hydrostatique présenté sur la figure 1.

On retrouve donc sur cette figure 3 des éléments déjà décrits pour la figure 1, ces éléments étant désignés par la même référence que pour la figure 1. Ce circuit comporte en outre une ligne de gavage supplémentaire 150 telle que présentée sur la figure 2, qui relie le bloc d'échange 60 avec la ligne série 104, via un clapet anti-retour supplémentaire 154.

Sur le mode de réalisation représenté, le point de liaison avec la ligne de gavage supplémentaire 150 est situé entre la sortie du tiroir d'échange 62 et l'entrée de la soupape 64 du bloc d'échange 60.

Cette ligne de gavage supplémentaire 150 permet donc de prélever du fluide initialement destiné à être envoyé dans la ligne d'échange 66, et de le réinjecter dans la ligne série 104.

Comme mentionné précédemment dans la description de la figure 1, le fluide passant par le bloc d'échange 60 provient de la ligne ayant la pression la plus basse parmi la ligne d'alimentation 102 et la ligne de retour 106 afin de ne pas pénaliser la motricité des moteurs.

Dans le mode de réalisation représenté sur la figure 3, la ligne de gavage supplémentaire 150 comporte un clapet anti-retour supplémentaire 154, adapté pour que le fluide ne puisse s'écouler que dans le sens de la ligne de gavage supplémentaire 150 vers la ligne série 104.

Disposer ainsi la ligne de gavage supplémentaire permet de tirer avantage des composants existants, qui sont susceptibles de comporter des connexions non utilisées par les composants conventionnels du circuit, et qui peuvent donc être exploitées pour l'ajout de cette ligne de gavage supplémentaire 150.

Plus généralement, la ligne de gavage supplémentaire 150 peut être reliée à un bloc d'échange 60 tel que représenté sur les figures, ou à tout autre élément permettant de faire sortir du fluide du circuit fermé.

L'invention trouve une application particulière dans les circuits de transmission hydrostatique dans lesquels les moteurs sont des moteurs hydrauliques à pistons radiaux et à came multilobes, également appelés moteurs à fort couple et basse vitesse.

## Revendications

1. Circuit fermé de transmission hydrostatique comprenant
- un réservoir de fluide (50),
- une pompe hydraulique (12 ; 212),
- un premier ensemble moteur (20 ; 220) et un second ensemble moteur (30, 40 ; 230), lesdits premier et second ensembles moteur (30, 40 ; 230), comprenant chacun au moins un moteur hydraulique, ledit premier ensemble moteur (20 ; 220) étant relié à la pompe hydraulique (12 ; 212) par une ligne d'alimentation (102 ; 202), et étant monté en série avec ledit second ensemble moteur (30, 40 ; 230) via une ligne série (104 ; 204), ledit second ensemble moteur (30, 40 ; 230) étant relié à la pompe hydraulique (12 ; 212) par une ligne de retour (106 ; 206),
- une pompe de gavage (14 ; 214) qui prélève du fluide dans le réservoir de fluide (50) et gave le circuit fermé au niveau de la ligne série (104 ; 204),
- un bloc d'échange (60 ; 260) relié au circuit fermé, et qui extrait de celui-ci un volume de fluide injecté par la pompe de gavage (14 ; 214) ledit circuit étant **caractérisé en ce qu'**il comprend en outre une ligne de gavage supplémentaire (150 ; 350) qui prélève du fluide en sortie du bloc d'échange (60 ; 260) et gave le circuit de transmission hydrostatique au niveau de la ligne série (104 ; 204).

2. Circuit de transmission hydrostatique selon la revendication 1, dans lequel la ligne de gavage supplémentaire comprend un clapet anti-retour adapté pour que le fluide ne puisse s'écouler que dans le sens de la ligne de gavage supplémentaire vers la ligne série.

3. Circuit de transmission hydrostatique selon l'une des revendications précédentes, **caractérisé en ce que** le premier ensemble moteur comprend deux moteurs hydrauliques élémentaires sur un même arbre de transmission, le premier de ces deux moteurs élémentaires étant relié à la pompe hydraulique par la ligne de retour, et le second de ces deux moteurs élémentaires étant relié par la ligne série au second ensemble moteur.

4. Circuit de transmission hydrostatique selon l'une des revendications précédentes, **caractérisé en ce que** ledit second ensemble moteur comprend deux moteurs hydrauliques montés en parallèles l'un par rapport à l'autre.

5. Circuit de transmission hydrostatique selon l'une des revendications précédentes, **caractérisé en ce que** ledit bloc d'échange comprend un tiroir d'échange et une soupape en série, ladite ligne de gavage étant reliée au bloc échange à un point situé entre ledit tiroir et ladite soupape.

6. Circuit de transmission hydrostatique selon la revendication précédente, **caractérisé en ce que** :
- ledit bloc d'échange comprend deux entrées et une sortie,
- ledit tiroir d'échange comprend deux entrées et une sortie,
- ladite soupape dudit bloc d'échange comprend une entrée et une sortie,
lesdites deux entrées du bloc d'échange étant reliées aux deux entrées du tiroir d'échange,
la sortie du tiroir d'échange étant reliée à l'entrée de la soupape du bloc d'échange,
la sortie de la soupape du bloc d'échange étant reliée à la sortie du bloc d'échange.

7. Circuit de transmission hydrostatique selon la revendication précédente, **caractérisé en ce que** :
- la première entrée du bloc d'échange est reliée à la ligne d'alimentation d'une part, et à la première entrée du tiroir d'échange d'autre part,
- la seconde entrée du bloc d'échange est reliée à la ligne de retour d'une part, et à la seconde entrée du tiroir d'échange d'autre part,
ledit tiroir d'échange comprenant trois positions :
- une première position dans laquelle la première entrée du tiroir d'échange est fermée, et la seconde entrée du tiroir d'échange est reliée à la sortie du tiroir d'échange,
- une deuxième position dans laquelle la première entrée du tiroir d'échange, la seconde entrée du tiroir d'échange, et la sortie du tiroir d'échange sont fermées,
- une troisième position dans laquelle la première entrée du tiroir d'échange est reliée à la sortie du tiroir d'échange, et la seconde entrée du tiroir d'échange est fermée.

8. Circuit de transmission hydrostatique selon l'une des revendications précédentes, **caractérisé en ce que** lesdits moteurs sont. Des moteurs hydrauliques à pistons radiaux et à came multilobes.

## Claims

1. A hydrostatic transmission closed loop circuit, comprising
- a fluid tank (50),
- a hydraulic pump (12; 212),
- a first engine assembly (20; 220) and a second engine assembly (30, 40; 230), said first and second engine assemblies (30, 40; 230), each comprising at least one hydraulic engine, said first engine assembly (20; 220) being connected to the hydraulic pump (12; 212) by a supply line (102; 202), and being mounted in series with said second engine assembly (30, 40; 230) via a series line (104; 204), said second engine assembly (30, 40; 230) being connected to the hydraulic pump (12; 212) by a return line (106; 206),
- a booster pump (14; 214) which removes fluid in the fluid tank (50) and boosts the closed circuit at the level of the series line (104; 204),
- an exchange unit (60; 260) connected to the closed circuit, and which extracts therefrom a volume of fluid injected by the booster pump (14; 214),
said circuit being **characterised in that** it also comprises a supplementary boosting line (150; 350) which removes fluid at the outlet of the exchange unit (60; 260) and boosts the hydrostatic transmission circuit at the level of the series line (104; 204).

2. The hydrostatic transmission circuit as claimed in Claim 1, in which the supplementary boosting line comprises a check valve adapted so that fluid can flow only in the direction of the supplementary boosting line to the series line.

3. The hydrostatic transmission circuit as claimed in any one of the preceding claims, **characterised in that** the first engine assembly comprises two elementary hydraulic engines on the same transmission shaft, the first of these two elementary engines being connected to the hydraulic pump by the return line, and the second of these two elementary engines being connected by the series line to the second engine assembly.

4. The hydrostatic transmission circuit as claimed in any one of the preceding claims, **characterised in that** said second engine assembly comprises two hydraulic engines mounted in parallel relative to one another.

5. The hydrostatic transmission circuit as claimed in any one of the preceding claims, **characterised in that** said exchange unit comprises an exchange spool and a valve in series, said boosting line being connected to the exchange unit at a point located between said slide valve and said valve.

6. The hydrostatic transmission circuit as claimed in the preceding claim, **characterised in that**:
- said exchange unit comprises two inlets and an outlet,
- said exchange spool comprises two inlets and an outlet,
- said valve of said exchange unit comprises an inlet and an outlet,
- said two inlets of the exchange unit being connected to the two inlets of the exchange spool,
- an outlet of the exchange spool being connected to the inlet of the valve of the exchange unit,
- an outlet of the valve of the exchange unit being connected to the outlet of the exchange unit.

7. The hydrostatic transmission circuit as claimed in the preceding claim, **characterised in that**:
- the first inlet of the exchange unit is connected to the supply line on the one hand, and to the first inlet of the exchange spool on the other,
- the second inlet of the exchange unit is connected to the return line on the one hand, and to the second inlet of the exchange spool on the other, said exchange spool comprising three positions:
- a first position in which the first inlet of the exchange spool is closed, and the second inlet of the exchange spool is connected to the outlet of the exchange spool,
- a second position in which the first inlet of the exchange spool, the second inlet of the exchange spool, and the outlet of the exchange spool are closed,
- a third position in which the first inlet of the exchange spool is connected to the outlet of the exchange spool, and the second inlet of the exchange spool is closed.

8. The hydrostatic transmission circuit as claimed in any one of the preceding claims, **characterised in that** said engines are hydraulic engines with radial pistons and multilobe cams.

## Patentansprüche

1. Geschlossener Kreislauf für ein hydrostatisches Getriebe, umfassend:
- einen Fluidbehälter (50),
- eine hydraulische Pumpe (12; 212),
- eine erste Motoranordnung (20; 220) und eine zweite Motoranordnung (30, 40; 230), wobei die erste und die zweite Motoranordnung (30, 40; 230) jeweils mindestens einen hydraulischen Motor umfassen, wobei die erste Motoranordnung (20; 220) durch eine Versorgungsleitung (102; 202) mit der hydraulischen Pumpe (12; 212) verbunden ist und mit der zweiten Motoranordnung (30, 40; 230) über eine serielle Leitung (104; 204) in Reihe geschaltet ist, wobei die zweite Motoranordnung (30, 40; 230) durch eine Rückleitung (106; 206) mit der hydraulischen Pumpe (12; 2112) verbunden ist,
- eine Ladepumpe (14; 214), die das Fluid dem Fluidbehälter (50) entnimmt und den geschlossenen Kreislauf im Bereich der seriellen Leitung (104; 204) lädt,
- einen Austauschblock (60; 260), der mit dem geschlossenen Kreislauf verbunden ist und der diesem ein Volumen des durch die Ladepumpe (14; 214) eingespritzten Fluides entnimmt,
wobei der Kreislauf **dadurch gekennzeichnet ist, dass** er ferner eine zusätzliche Ladeleitung (150; 350) umfasst, die am Ausgang des Austauschblocks (60; 260) Fluid entnimmt und den Kreislauf für das hydrostatische Getriebe im Bereich der seriellen Leitung (104; 204) lädt.

2. Kreislauf für ein hydrostatisches Getriebe nach Anspruch 1, wobei die zusätzliche Ladeleitung ein Rückschlagventil umfasst, das derart angepasst ist, dass das Fluid nur in Richtung von der zusätzlichen Ladeleitung zu der seriellen Leitung strömen kann.

3. Kreislauf für ein hydrostatisches Getriebe nach einem der vorhergehenden Ansprüche, **dadurch gekennzeichnet, dass** die erste Motoranordnung auf ein und derselben Getriebewelle zwei elementare hydraulische Motoren umfasst, wobei der erste dieser zwei elementaren Motoren durch die Rückleitung mit der hydraulischen Pumpe verbunden ist und der zweite dieser zwei elementaren Motoren durch die serielle Leitung mit der zweiten Motoranordnung verbunden ist.

4. Kreislauf für ein hydrostatisches Getriebe nach einem der vorhergehenden Ansprüche, **dadurch gekennzeichnet, dass** die zweite Motoranordnung zwei hydraulische Motoren umfasst, die relativ zueinander parallel geschaltet sind.

5. Kreislauf für ein hydrostatisches Getriebe nach einem der vorhergehenden Ansprüche, **dadurch gekennzeichnet, dass** der Austauschblock einen Wechselschieber und ein Ventil in Reihe umfasst, wobei die Ladeleitung mit dem Austauschblock an einem Punkt verbunden ist, der sich zwischen dem Schieber und dem Ventil befindet.

6. Kreislauf für ein hydrostatisches Getriebe nach dem vorhergehenden Anspruch, **dadurch gekennzeichnet, dass**
- der Austauschblock zwei Eingänge und einen Ausgang umfasst,
- der Wechselschieber zwei Eingänge und einen Ausgang umfasst,
- das Ventil des Austauschblocks einen Eingang und einen Ausgang umfasst,
wobei die zwei Eingänge des Austauschblocks mit den zwei Eingängen des Wechselschiebers verbunden sind, wobei der Ausgang des Wechselschiebers mit dem Eingang des Ventils des Austauschblocks verbunden ist,
wobei der Ausgang des Ventils des Austauschblocks mit dem Ausgang des Austauschblocks verbunden ist.

7. Kreislauf für ein hydrostatisches Getriebe nach dem vorhergehenden Anspruch, **dadurch gekennzeichnet, dass**
- der erste Eingang des Austauschblocks mit der Versorgungsleitung einerseits und mit dem ersten Eingang des Wechselschiebers andererseits verbunden ist,
- der zweite Eingang des Austauschblocks mit der Rückleitung einerseits und mit dem zweiten Eingang des Wechselschiebers andererseits verbunden ist,
wobei der Wechselschieber drei Stellungen aufweist:
- eine erste Stellung, in welcher der erste Eingang des Wechselschiebers geschlossen ist und der zweite Eingang des Wechselschiebers mit dem Ausgang des Wechselschiebers verbunden ist,
- eine zweite Stellung, in welcher der erste Eingang des Wechselschiebers, der zweite Eingang des Wechselschiebers und der Ausgang des Wechselschiebers geschlossen sind,
- eine dritte Stellung, in welcher der erste Eingang des Wechselschiebers mit dem Ausgang des Wechselschiebers verbunden ist und der zweite Eingang des Wechselschiebers geschlossen ist.

8. Kreislauf für ein hydrostatisches Getriebe nach einem der vorhergehenden Ansprüche, **dadurch gekennzeichnet, dass** die Motoren hydraulische Motoren mit Radialkolben und Mehrfachnocke sind.
